# FASCICULE DE BREVET EUROPEEN

(11) **EP 0 865 412 B1**
(45) Date de publication et mention de la délivrance du brevet: **03.09.2003**
(21) Numéro de dépôt: 96941100.8
(22) Date de dépôt: 03.12.1996
(51) Int. Cl.: C01F 17/00, B01J 23/10, B01D 53/94

(54) **OXYDE DE CERIUM A PORES DE STRUCTURE LAMELLAIRE, PROCEDE DE PREPARATION ET UTILISATION EN CATALYSE**
CERIUMOXID MIT LAMELLARER PORENSTRUKTUR, VERFAHREN ZUR HERSTELLUNG UND VERWENDUNG ALS KATALYSATOR DAVON
CERIUM OXIDE WITH PORES HAVING A LAMELLAR STRUCTURE, PREPARATION METHOD THEREFOR AND USE THEREOF IN CATALYSIS

(30) Priorité: 04.12.1995 FR 9514291
(43) Date de publication de la demande: 23.09.1998
(73) Titulaire: RHODIA CHIMIE, 92408 Courbevoie Cédex (FR)
(72) Inventeur: BONNEAU, Lionel, F-17540 Angliers (FR); FERLIN, Patrick, F-75019 Paris (FR); ZING, Christophe, F-92150 Suresnes (FR)
(74) Mandataire: Dubruc, Philippe
(86) Numéro de dépôt international: FR9601918
(87) Numéro de publication internationale: WO97020772

(56) Documents cités:
- EP-A- 0 300 852
- EP-A- 0 622 336
- FR-A- 2 583 034
- FR-A- 2 608 583
- CHEMICAL ABSTRACTS, vol. 85, no. 20, 15 Novembre 1976 Columbus, Ohio, US; abstract no. 153173, E.I. ONSTOTT ET AL.: "Hydrogen and carbon monoxide from decomposition of cerous carbonates." XP002013042 & PROC. RARE EARTH RES. CONF. 12TH, ED: C.E. LUNDIN, vol. 1, 1976, UNIV. DENVER (COLORADO, USA), pages 1-8,
- JOURNAL OF MATERIALS SCIENCE LETTERS, vol. 10, no. 11, 1 Juin 1991, pages 666-667, XP000209784 VARMA H K ET AL: "CERIUM OXIDE POWDER WITH INCREASED SURFACE AREA FOR CATALYST SUPPORT"

## Description

La présente invention concerne un oxyde de cérium à pores de structure lamellaire, son procédé de préparation et son utilisation en catalyse.

L'oxyde de cérium, seul ou en présence d'autres oxydes métalliques est utilisé notamment comme catalyseur, en particulier pour le traitement des gaz d'échappement d'automobile, voir Proc. Rare Earth Res. Conf. 12th, 1, 1976, 1-8, Onstatt et al.

Pour avoir une bonne réactivité catalytique, il est souhaitable de disposer d'un oxyde de cérium ayant une grande surface spécifique et qui ne diminue pas d'une manière trop importante lorsque que l'oxyde est soumis à une température élevée, par exemple de l'ordre de 800°C.

En plus de la surface spécifique, les caractéristiques de porosité peuvent avoir de l'importance pour les propriétés catalytiques d'un produit. Ainsi, la forme et la répartition des pores peuvent avoir une influence dans les contacts entre phases dans le processus de catalyse. Par ailleurs, la diminution de la surface avec la température est due notamment au bouchage progressif des pores et, suivant la forme des pores, ce phénomène peut être accéléré.

L'objet de l'invention est de procurer un oxyde de cérium présentant des caractéristiques spécifiques de porosité.

Un autre objet de l'invention est un procédé permettant d'obtenir cet oxyde de cérium.

Dans ce but, l'oxyde de cérium de l'invention est caractérisé en ce qu'il présente des pores de structure lamellaire.

Par ailleurs, l'invention concerne un procédé de préparation d'un oxyde de cérium à pores de structure lamellaire par traitement thermique d'un carbonate de cérium, qui est caractérisé en ce qu'on traite thermiquement un composé constitué essentiellement par un carbonate de cérium octahydraté.

D'autres caractéristiques, détails et avantages de l'invention apparaîtront encore plus complètement à la lecture de la description qui va suivre et des dessins annexés dans lesquels :
- la figure 1 est une photographie au microscope électronique d'un grain d'oxyde de cérium selon l'invention;
- la figure 2 est une photographie au microscope électronique et à plus fort grossissement d'une partie d'un grain d'oxyde de cérium selon l'invention.

On entend par surface spécifique pour le reste de la description, la surface spécifique B.E.T. déterminée par adsorption d'azote conformément à la norme ASTM D 3663-78 établie à partir de la méthode BRUNAUER - EMMETT- TELLER décrite dans le périodique "The Journal of the American Society, 60, 309 (1938)".

Le volume poreux et la taille des pores sont déterminés par des techniques bien connues mettant en oeuvre aussi la méthode BET. On pourra notamment se reférer à l'ouvrage Adsorption, Surface Area and Porosity, Gregg et Sing, Academic Press, 1967 pp 160-172 et 174-177.

La caractéristique principale de l'oxyde de cérium de l'invention est la structure de ses pores. Ceux-ci présentent en effet une structure lamellaire. Ils se présentent sous forme de fentes ou canaux de diamètre sensiblement constant. Il s'agit là d'une différence essentielle par rapport aux oxydes de cérium de l'art antérieur dans lesquels les pores ont une structure sensiblement sphérique.

Une autre caractéristique de l'oxyde de l'invention est que ses pores peuvent avoir une structure homogène. On entend par là que les pores, au moins en majorité et, plus particulièrement substantiellement en leur totalité, présentent la même structure en forme de lamelle ou de canal.

En outre, selon une caractéristique additionnelle de l'oxyde de l'invention, les pores, ou en d'autres termes les lamelles ou les canaux qui les constituent, sont, au moins en partie et plus particulièrement substantiellement en leur totalité, orientés parallèlement les uns aux autres.

Selon une variante de l'invention, les pores, au moins pour une partie d'entre eux, s'étendent dans toute l'épaisseur du grain. On entend ici par grain la particule d'oxyde de cérium obtenue après désagglomération des agglomérats. Cette disposition des pores permet un passage par les pores d'une face à une autre du grain de l'oxyde.

Selon une autre variante avantageuse de l'invention, la répartition des pores est monomodale. Plus particulièrement, le rapport σ/m (d₈₄-d₁₆)/2d₅₀ est d'au plus 0,6, dₙ (n=84, 16 ou 50) étant défini comme le diamètre tel que tous les pores de diamètre supérieur à celui-ci constituent n% du volume poreux. Ce rapport σ/m peut être plus particulièrement d'au plus 0,45 et dans certains cas, il peut être d'au plus 0,3.

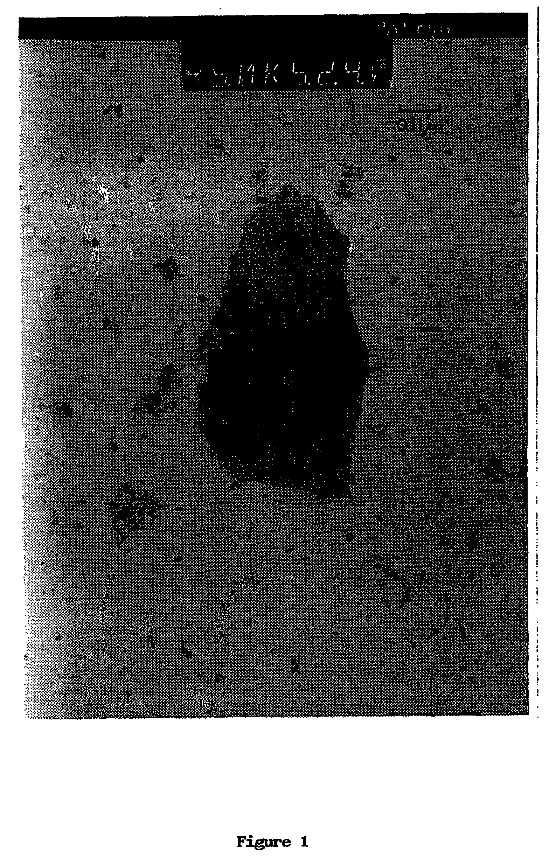

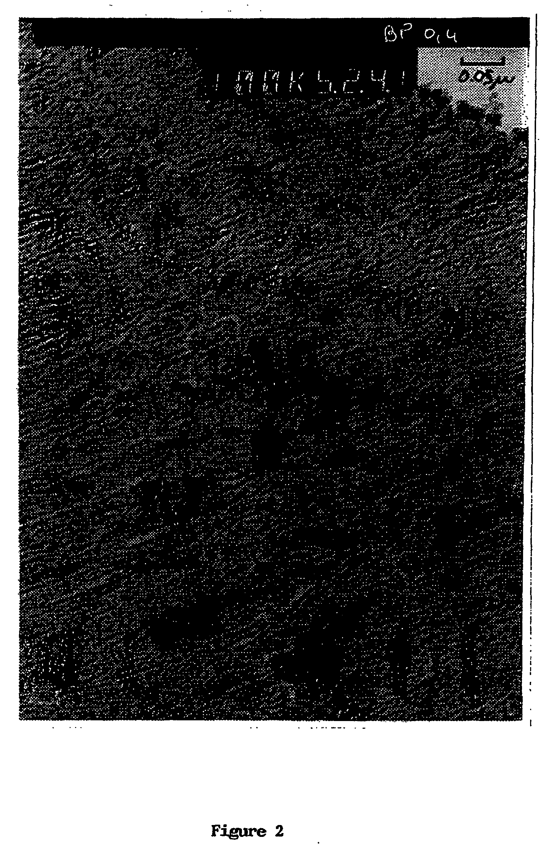

Les caractéristiques de structure de pore qui ont été décrites ci-dessus apparaissent très bien sur les figures 1 et 2.

On peut mentionner par ailleurs que l'oxyde de cérium de l'invention peut être essentiellement et plus particulièrement totalement constitué de cérium IV. On entend par totalement le fait que l'analyse par diffraction RX de l'oxyde de l'invention ne permet pas de déceler de l'oxyde de cérium III.

L'oxyde de cérium de l'invention présente de préférence une taille moyenne de particule comprise entre 10 et 50µm.

Des modes de réalisation particuliers de l'invention vont maintenant être décrits.

Dans le cas de ce premier mode, la porosité de l'oxyde est du type mésoporeuse. En effet, au moins 70%, plus particulièrement au moins 80% et encore plus particulièrement au moins 90% du volume poreux est apporté par des pores de diamètre compris entre 20 et 100Å. Le volume poreux du produit est généralement d'au plus 0.30cm³/g, plus particulièrement d'au plus 0,25cm³/g. Le volume poreux minimal est habituellement d'au moins 0,01cm³/g.

La surface spécifique de l'oxyde de cérium selon ce premier mode peut varier dans une large gamme. Généralement, cette surface est d'au moins 50m²/g. Cette surface peut être plus particulièrement d'au moins 150m²/g et encore plus particulièrement comprise entre 150 et 250m²/g. L'oxyde de cérium selon ce mode de réalisation peut être plus particulièrement un oxyde qui n'a pas été calciné ou qui a subi un traitement thermique à une température d'au plus 350°C.

Selon un second mode de réalisation de l'invention, l'oxyde de cérium est caractérisé en ce qu'au moins 70%, plus particulièrement au moins 80% du volume poreux est apporté par des pores de diamètre compris entre 100 et 300Å. Le volume poreux du produit est généralement d'au plus 0,20cm³/g, plus particulièrement d'au plus 0,15cm³/g. Le volume poreux minimal est habituellement d'au moins 0,01cm³/g.

Ce second mode de réalisation s'applique notamment à un oxyde ayant subi une calcination sous air à une température supérieure à 350°C et en particulier de 2 heures à 800°C et, dans ce dernier cas, l'oxyde présente une surface spécifique d'au moins 15m²/g. Cette surface peut être plus particulièrement d'au moins 40m²/g et encore plus particulièrement d'au moins 60m²/g.

Un procédé de préparation de l'oxyde de cérium à pores de structure lamellaire selon l'invention va maintenant être décrit.

Une première caractéristique de ce procédé est le produit de départ. On part en effet d'un composé constitué essentiellement d'un carbonate de cérium octahydraté de formule Ce₂(CO₃)₃.8H₂O ou d'un carbonate ayant un degré d'hydratation très proche, et dans ce cas par excès de préférence, de 8H₂O. Ce carbonate est de structure lanthanite. De préférence, ce composé de départ est en totalité un carbonate octahydraté.

Le procédé de l'invention est aussi caractérisé par un traitement thermique dans des conditions spécifiques. Ces conditions sont choisies de telle manière qu'il puisse y avoir décomposition du carbonate de cérium octahydraté pour conduire à l'oxyde sans qu'il y ait déshydratation de ce carbonate et formation d'un carbonate à un autre degré d'hydratation.

La température du traitement est la température minimale nécessaire pour obtenir la décomposition du carbonate. Elle est généralement supérieure à 100°C et plus particulièrement d'au moins 120°C ou 130°C. La température maximale est fixée essentiellement par la surface spécifique que l'on souhaite obtenir pour l'oxyde à l'issue du traitement. Généralement, on ne dépasse pas une température de 350°C ou encore de 300°C. On utilisera plus particulièrement une température comprise entre 130 et 150°C.

Le traitement thermique a lieu par ailleurs dans une atmosphère spécifique qui permet de conserver le carbonate sous un forme octahydratée. Cette atmosphère comprend de la vapeur d'eau, ce peut être plus particulièrement un mélange air/vapeur d'eau ou oxygène/vapeur d'eau, et la fraction volumique en vapeur d'eau dans cette atmosphère est d'au moins 40%. De préférence, la fraction volumique en vapeur d'eau est d'au moins 70%, plus particulièrement d'au moins 90% et elle peut être comprise entre 95 et 99%. On notera qu'il est possible de monter sous air en température, de l'ambiante à la température où aura lieu le traitement thermique.

Le traitement est conduit dans tout type d'appareillage susceptible d'assurer que chaque particule de carbonate à traiter soit dans un environnement dans lequel les conditions qui viennent d'être décrites ci-dessus soient vérifiées au mieux. On pourra donc utiliser généralement tout réacteur permettant d'assurer un bon contact entre la phase gaz et la phase solide. Un réacteur de type lit fluide convient bien pour la mise en oeuvre du procédé. Ce réacteur peut être continu du type piston ou continu parfaitement agité ou encore discontinu et dans ce dernier cas on assurera une agitation aussi parfaite que possible. Le mélange air/vapeur d'eau ou oxygène/vapeur d'eau décrit plus haut peut constituer le gaz de fluidisation du lit fluide.

Les temps de séjours seront calculés d'une manière connue en soi en fonction du type de réacteur et des conditions de traitement utilisées.

Le carbonate de cérium octahydraté est un produit connu. Il peut être préparé par séchage de carbonates de cérium présentant un degré d'hydratation plus élevé par exemple de 15 à 22 H₂O. Ces carbonates sont obtenus notamment par précipitation d'un sel de cérium comme un nitrate de cérium avec un carbonate comme le carbonate d'ammonium. Le séchage peut être réalisé par passage du carbonate dans un atomiseur ou dans un lit fluide à basse température par exemple 50-60°C sous un flux gazeux d'air. On peut aussi procéder par séchage conductif sur un système à plaques chauffantes par exemple à 70°C avec un temps de séjour de 1 heure ou 1,5 heure. Le séchage peut encore se faire en turbosphère.

L'oxyde de cérium obtenu après le traitement thermique qui vient d'être décrit peut ensuite être calciné. La température de calcination sera notamment choisie en fonction de la température d'utilisation ultérieure de l'oxyde et ceci en tenant compte du fait que la surface spécifique du produit calciné est d'autant plus faible que la température de calcination est élevée.

L'oxyde de cérium de l'invention peut être utilisé dans différentes applications notamment en tant que charge, pigment ou comme constituant de compositions de polissage de verre. Il peut être utilisé tout particulièrement comme catalyseur ou entrer lui-même dans la composition d'un système catalytique.

L'oxyde de cérium de l'invention peut se présenter sous forme de poudre mais il peut éventuellement être mis en forme de granulés, billes, cylindres ou nids d'abeille de dimensions variables en fonction de l'utilisation désirée.

Par ailleurs, dans le cas de la catalyse, l'oxyde de cérium peut être appliqué sur tout support utilisé habituellement dans ce domaine, comme ZrO₂, Al₂O₃, TiO₂ ou SiO_{2.} L'oxyde de cérium peut aussi être utilisé dans des systèmes catalytiques comprenant un revêtement (wash coat) à base de cet oxyde, sur un substrat du type par exemple monolithe métallique ou en céramique. Le revêtement peut comporter lui aussi un support du type de ceux mentionnés plus haut.

L'invention concerne aussi l'utilisation d'un oxyde de cérium et d'un système catalytique tels que décrits plus haut à la fabrication de catalyseur pour post combustion automobile.

Enfin, l'invention concerne l'utilisation de l'oxyde de cérium ou de ces systèmes catalytiques à la catalyse de post combustion automobile.

Dans le cas de ces utilisations en catalyse, l'oxyde de cérium de l'invention peut être employé en combinaison avec des métaux précieux. La nature de ces métaux et les techniques d'incorporation de ceux-ci sont bien connues de l'homme du métier. Par exemple, les métaux peuvent être le platine, le rhodium, le palladium, le ruthénium ou l'iridium, ils peuvent notamment être incorporés par imprégnation.

Des exemples non limitatifs vont maintenant être donnés.

Dans ces exemples, les mesures de volume poreux, de taille de pores et de distribution poreuse ont été faites sur un appareil Micromeritics® Asap 2000.

### EXEMPLE 1

Un carbonate de cérium humide de perte au feu (PAF) 60% est soumis à un séchage sous air sec en étuve pendant 24h à 50°C.

Le carbonate sec obtenu -PAF 46,1%- en couche mince de quelques millimètres est soumis à différents traitements sous balayage (VVH 10000l/l/h) dont les caractéristiques sont données dans le tableau ci-dessous.

| Exemple | Température | Composition volumique eau/oxygène/azote | Durée |
|---|---|---|---|
| 1-1 | 150°C | 60/3/37 | 2h |
| 1-2 | 150°C | 70/3/27 | 2h |
| 1-3 | 150°C | 90/3/7 | 2h |
| 1-4 | 150°C | 95/3/2 | 2h |
| 1-5 comparatif | 108°C | 30/0,1/69,9 | 6h |

Les oxydes de cérium ainsi obtenus présentent les caractéristiques ci-dessous. Les surfaces spécifiques données sont la surface du produit avant calcination, c'est à dire à l'issue du traitement thermique à la température donnée plus haut et la surface après calcination à 800°C, 2 heures.

| Exemple | Surface spécifique (m²/g) avant/après calcination | Volume poreux (20-1000Å) cm³/g | % du volume poreux (20-100Å) cm³/g | Taille moyenne des pores Å | σ/m |
|---|---|---|---|---|---|
| 1-1 | 185/35 | 0,19 | 92 | 33 | 0,30 |
| 1-2 | 190/44 | 0,20 | 94 | 37 | 0,32 |
| 1-3 | 180/41 | 0,22 | 92 | 38 | 0,22 |
| 1-4 | 195/36 | 0,21 | 94 | 33 | 0,27 |
| 1-5 comparatif | 89/21 | 0,10 | 86 | 42 | 0,48 |

Le produit de l'exemple 1-5 présente des pores de structure sphérique et non pas de structure lamellaire comme dans le cas des autres produits. Après traitement à 800°C 2h, il présente une surface spécifique de 21m2/g et un volume poreux dans la zone 50-1000Å de 0,11cm3/g, 62% du volume poreux est constitué de pores dans la zone 100-300Å, la distribution poreuse est caractérisée par un *σ*/m de 0,62 et une taille moyenne de 135Å.

### EXEMPLE 2

Un carbonate de Ce -PAF- 60% est soumis à un séchage sous air sec en étuve pendant 24h à 50°C.

Le carbonate sec obtenu - PAF 44,2% - en couche mince de quelques millimètres est alors soumis à un traitement thermique sous balayage à 150°C (VVH 1000000l/l/h) d'un gaz constitué de vapeur d'eau et d'air en composition volumique 72/28 pendant 1h30.

L'oxyde de cérium obtenu présente une surface spécifique de 206m²/g et un volume poreux dans la zone 20-1000Å de 0,24cm³/g; 92% du volume poreux est constitué de pores dans la zone 20-100Å; la distribution poreuse est caractérisée par un σ/m de 0,41 et une taille moyenne de 35Å.

Les figures 1 et 2 illustrent la structure particulière des pores en forme de lamelle du produit ainsi obtenu.

Après traitement à 800°C 2h, l'oxyde de cérium présente une surface spécifique de 37m²/g et un volume poreux dans la zone 50-1000Å de 0,12cm³/g; 76% du volume poreux est constitué de pores dans la zone 100-300Å; la distribution poreuse est caractérisée par un σ/m de 0,33 et une taille moyenne de 139Å.

On procède à un traitement thermique du même carbonate sec mais en modifiant seulement le rapport vapeur d'eau/air qui devient égal à 90/10. Le produit obtenu présente une surface de 183m²/g. Cette surface, après calcination à 800°C 2h est de 47m²/g.

### EXEMPLE 3 COMPARATIF

On procède comme dans l'exemple 2 mais dans une atmosphère à 100% d'air. Le produit obtenu présente une surface de 110m²/g. Cette surface, après calcination à 800°C 2h, est de 3m²/g. Ce produit présente des pores de structure sphérique.

### EXEMPLE 4

Un carbonate de Ce dePAF 60% est soumis à un séchage conductif sur plaque inox à 70°C pendant 75 minutes.

Le carbonate obtenu - PAF 43,1% - en couche mince de quelques millimètres est alors soumis au traitement thermique suivant : montée à 150°C sous balayage d'air en 10 minutes, puis maintien à 150°C pendant 1 h 30 minutes sous balayage (VVH 1.000.000 I/I/h) d'un mélange gazeux constitué de vapeur d'eau et d'air en rapport volumique 90/10.

L'oxyde de cérium obtenu - PAF 6,4% - présente une surface spécifique de 185 m²/g et après traitement à 800°C/2 heures de 75 m²/g.

### EXEMPLE 5

Un carbonate de cérium humide - PAF 60% - est soumis à un séchage sous air sec en étuve pendant 24 heures à 50°C.

Le carbonate sec obtenu - PAF 46,1% - est alors soumis à un traitement sous mélange vapeur d'eau/air comparable à l'exemple 3.

L'oxyde de cérium obtenu présente une surface spécifique de 207 m²/g et de 44 m²/g après traitement à 800°C pendant 2 heures.

### EXEMPLE 6

Un carbonate de cérium humide - PAF 60% - est soumis à un séchage par fluidisation en air sec à 50°C pendant 45 minutes.

Le carbonate sec obtenu -PAF 44,4% - est alors soumis au même traitement que les deux exemples précédents.

L'oxyde obtenu - PAF 5% - développe une surface de 178m²/g et de 63 m²/g après traitement à 800°C pendant 2 heures.

### EXEMPLE 7

Un carbonate de cérium humide - PAF 60% - est soumis à un séchage par fluidisation en air sec à 50°C pendant 45 minutes.

Le carbonate sec - PAF 43% - obtenu est soumis à une fluidisation, sous un mélange vapeur d'eau/air en composition volumique 90/10 à 150°C pendant 3 heures 25. La vitesse de fluidisation est de 0,1 m/seconde.

L'oxyde de cérium obtenu présente une surface spécifique de 190m²/g et un volume poreux dans la zone 20-1000Å de 0,23cm³/g; 88% du volume poreux est constitué de pores dans la zone 20-100Å; la distribution poreuse est caractérisée par un σ/m de 0,58 et une taille moyenne de 37Å.

Après traitement à 800°C 2h, l'oxyde de cérium présente une surface spécifique de 44m²/g et un volume poreux dans la zone 50-1000Å de 0,13cm³/g; 80% du volume poreux est constitué de pores dans la zone 100-300Å; la distribution poreuse est caractérisée par un σ/m de 0,32 et une taille moyenne de 171Å.

### EXEMPLE 8

Un carbonate de cérium humide - PAF 60% -est soumis à un séchage sous air sec en étuve pendant 24 heures à 50°C.

Le carbonate sec obtenu - PAF 44,2% - disposé en couche mince de quelques millimètres est soumis à un traitement thermique consistant en un chauffage de 120°C à 300°C à une vitesse de chauffage de 80°C/h sous balayage (VVH 1000000l/l/h d'un gaz constitué de vapeur d'eau et d'air en composition volumique 71/29.

Le composé obtenu présente une surface spécifique de 214m²/g, après traitement à 800°C pendant 2 heures, une surface spécifique de 14,5m²/g.

## Revendications

1. Oxyde de cérium **caractérisé en ce qu'**il présente des pores de structure lamellaire.

2. Oxyde de cérium selon la revendication 1, **caractérisé en ce que** les pores ont une structure lamellaire et homogène.

3. Oxyde de cérium selon la revendication 1 ou 2, **caractérisé en ce que** les pores sont au moins en partie orientés sensiblement parallèlement les uns aux autres.

4. Oxyde de cérium selon l'une des revendications précédentes, **caractérisé en ce que** les pores, au moins pour une partie d'entre eux, s'étendent dans toute l'épaisseur du grain.

5. Oxyde de cérium selon l'une des revendications précédentes, **caractérisé en ce qu'**il présente une répartition monomodale de ses pores, cette répartition présentant plus particulièrement un rapport σ/m d'au plus 0,6, σ/m étant défini par le rapport (d₈₄-d₁₆)/2d₅₀ dans lequel dₙ (n=84, 16 ou 50) représente un diamètre tel que tous les pores de diamètre supérieur à celui-ci constituent n% du volume poreux.

6. Oxyde de cérium selon l'une des revendications précédente, **caractérisé en ce qu'**au moins 70%, plus particulièrement au moins 80%, du volume poreux est apporté par des pores de diamètre compris entre 20 et 100Å.

7. Oxyde de cérium selon la revendication 6, **caractérisé en ce qu'**il présente une surface spécifique d'au moins 150m²/g, plus particulièrement comprise entre 150 et 200m²/g.

8. Oxyde de cérium selon l'une des revendications 1 à 5, **caractérisé en ce qu'**au moins 70%, plus particulièrement au moins 80% du volume poreux est apporté par des pores de diamètre compris entre 100 et 300Å.

9. Oxyde de cérium selon la revendication 8, **caractérisé en ce qu'**il présente après calcination 2 heures à 800°C, une surface spécifique d'au moins 15m²/g, plus particulièrement d'au moins 40m²/g.

10. Oxyde de cérium selon l'une des revendications précédentes, **caractérisé en ce qu'**il ne contient pas d'oxyde de cérium III décelable par analyse par diffraction RX.

11. Oxyde de cérium selon l'une des revendications 1 à 7 et 10, **caractérisé en ce qu'**il présente un volume poreux d'au plus 0,30cm³/g, plus particulièrement d'au plus 0,25cm³/g.

12. Procédé de préparation d'un oxyde de cérium à pores de structure lamellaire par traitement thermique d'un carbonate de cérium, **caractérisé en ce qu'**on traite thermiquement un composé constitué essentiellement par un carbonate de cérium octahydraté dans des conditions permettant la décomposition du carbonate sans déshydratation de celui-ci et formation d'un carbonate à un autre degré d'hydratation et dans une atmosphère comprenant un mélange air/vapeur d'eau ou oxygène/vapeur d'eau avec une fraction volumique en vapeur d'eau d'au moins 40%.

13. Procédé selon la revendication 12, **caractérisé en ce qu'**on traite thermiquement le composé précité à une température supérieure à 100°C et plus particulièrement d'au moins 120°C.

14. Procédé selon l'une des revendications 12 ou 13, **caractérisé en ce qu'**on utilise une atmosphère avec une fraction volumique en vapeur d'eau d'au moins 70%, plus particulièrement d'au moins 90%.

15. Procédé selon l'une des revendications 12 à 14, **caractérisé en ce qu'**on effectue le traitement thermique dans un réacteur de type lit fluide.

16. Système catalytique **caractérisé en ce qu'**il comprend un oxyde de cérium selon l'une des revendications 1 à 11.

17. Système catalytique **caractérisé en ce qu'**il comprend un revêtement à base d'un oxyde de cérium selon l'une des revendications 1 à 11, sur un substrat.

18. Utilisation d'un oxyde de cérium selon l'une des revendications 1 à 11, ou d'un système catalytique selon la revendication 16 ou 17, à la fabrication de catalyseur pour post combustion automobile.

19. Utilisation d'un oxyde de cérium selon l'une des revendications 1 à 11, ou d'un système catalytique selon la revendication 16 ou 17, dans la catalyse de post combustion automobile.

## Patentansprüche

1. Ceriumoxid **dadurch gekennzeichnet, daß** es Poren lamellenartiger Struktur aufweist.

2. Ceriumoxid nach Anspruch 1,
**dadurch gekennzeichnet, daß** die Poren eine lamellenartige- und homogene Struktur haben.

3. Ceriumoxid nach Anspruch 1 oder 2,
**dadurch gekennzeichnet, daß** die Poren wenigstens teilweise im wesentlichen parallel zueinander ausgerichtet sind.

4. Ceriumoxid nach einem der vorhergehenden Ansprüche,
**dadurch gekennzeichnet, daß** wenigstens ein Teil der Poren sich in die ganze Breite des Korns erstreckt.

5. Ceriumoxid nach einem der vorhergehenden Ansprüche,
**dadurch gekennzeichnet, daß** es eine monomodale Verteilung seiner Poren aufweist, wobei diese Verteilung insbesondere ein Verhältniswert σ/m von höchstens 0,6 aufweist, wobei σ/m durch das Verhältnis (d₈₄-d₁₆)/2d₅₀ definiert ist, wobei dₙ(n=84, 16 oder 50) einen Durchmesser darstellt, derart, daß alle Poren deren Durchmesser größer ist, n% des Porenvolumen bilden.

6. Ceriumoxid nach einem der vorhergehenden Ansprüche,
**dadurch gekennzeichnet, daß** wenigstens 70%, insbesondere 80%, des Porenvolumens von Poren ausgemacht wird, deren Durchmesser zwischen 20 und 100Å liegt.

7. Ceriumoxid nach Anspruch 6,
**dadurch gekennzeichnet, daß** es eine spezifische Oberfläche von wenigstens 150m²/g aufweist, insbesondere zwischen 150 und 200 m²/g.

8. Ceriumoxid nach einem der Ansprüche 1 bis 5,
**dadurch gekennzeichnet, daß** wenigstens 70%, insbesondere wenigstens 80%, des Porenvolumens von Poren ausgemacht wird, deren Durchmesser zwischen 100 und 300Å liegt.

9. Ceriumoxid nach Anspruch 8,
**dadurch gekennzeichnet, daß** es nach einer zweistündigen Kalzination bei 800°C eine spezifische Oberfläche von wenigstens 15m²/g, insbesondere wenigstens 40m²/g, aufweist.

10. Ceriumoxid nach einem der vorhergehenden Ansprüche,
**dadurch gekennzeichnet, daß** es kein Ceriumoxid III enthält, das durch eine RX-Beugungsanalyse nachweisbar ist.

11. Ceriumoxid nach einem der Ansprüche 1 bis 7 und 10,
**dadurch gekennzeichnet, daß** es ein spezifisches Porenvolumen von höchstens 0,30cm³/g aufweist, insbesondere von höchstens 0,25cm³/g.

12. Verfahren zur Herstellung eines Ceriumoxids mit Poren lamellenartiger Struktur durch Wärmebehandlung eines Ceriumkarbonats,
**dadurch gekennzeichnet, daß** man eine Zusammensetzung wärmebehandelt, die im wesentlichen aus einem Ceriumkarbonat-Octahydrat besteht, unter Bedingungen, die den Karbonatabbau ohne Dehydratisierung und die Bildung eines Karbonats mit einem anderen Hydratationsgrad ermöglichen, und in einer Atmosphäre, die ein Wasserdampf-Luft- oder Wasserdampf-Sauerstoffgemisch mit einem wenigstens 40-prozentigen Volumenanteil an Wasserdampf umfasst.

13. Verfahren nach Anspruch 12, **dadurch gekennzeichnet, daß** man die genannte Zusammensetzung bei einer Temperatur wärmebehandelt, die höher als 100°C und insbesondere mindestens bei 120°C liegt.

14. Verfahren nach einem der Ansprüche 12 oder 13,
**dadurch gekennzeichnet, daß** man eine Atmosphäre einsetzt, deren Volumenanteil an Wasserdampf wenigstens 70% und insbesondere wenigstens 90% beträgt.

15. Verfahren nach einem der Ansprüche 12 bis 14, **dadurch gekennzeichnet, daß** man die Wärmebehandlung in einem Reaktor vom Fließbett-Typs ausführt.

16. Katalytisches System,
**dadurch gekennzeichnet, daß** es ein Ceriumoxid nach einem der Ansprüche 1 bis 11 umfasst.

17. Katalytisches System,
**dadurch gekennzeichnet, daß** es einen Überzug auf der Basis eines Ceriumoxids nach einem der Ansprüche 1 bis 11 auf einem Substrat umfasst.

18. Verwendung eines Ceriumoxids nach einem der Ansprüche 1 bis 11 oder eines Katalytisches Systems nach Anspruch 16 oder 17, zur Herstellung von Katalysatoren für die Nachverbrennung in Kraftfahrzeugen.

19. Verwendung eines Ceriumoxids nach einem der Ansprüche 1 bis 11 oder eines Katalytisches Systems nach Anspruch 16 oder 17 in der Katalyse bei der Nachverbrennung in Kraftfahrzeugen.

## Claims

1. Cerium oxide, **characterized in that** it exhibits pores having a lamellar structure.

2. Cerium oxide according to claim 1, **characterized in that** the pores have a lamellar and homogeneous structure.

3. Cerium oxide according to claim 1 or claim 2, **characterized in that** at least a portion of the pores are oriented substantially parallel to each other.

4. Cerium oxide according to any one of the preceding claims, **characterized in that** at least a portion of the pores extend through the entire thickness of the grain.

5. Cerium oxide according to any one of the preceding claims, **characterized in that** it has a unimodal pore distribution, this distribution more particularly having a ratio σ/m of at most 0.6, σ/m being defined by the ratio (d₈₄-d₁₆)/2d₅₀ where dₙ (n = 84, 16 or 50) represents a diameter such that all pores with a diameter higher than that diameter constitute n% of the pore volume.

6. Cerium oxide according to any one of the preceding claims, **characterized in that** at least 70%, more particularly at least 80% of the pore volume is taken up by pores with a diameter in the range 20 Å to 100 Å.

7. Cerium oxide according to claim 6, **characterized in that** it has a specific surface area of at least 150 m²/g, more particularly in the range 150 m²/g to 200 m²/g.

8. Cerium oxide according to any one of claims 1 to 5, **characterized in that** at least 70%, more particularly at least 80% of the pore volume is taken up by pores with a diameter in the range 100 Å to 300 Å.

9. Cerium oxide according to claim 8, **characterized in that** after calcining for 2 hours at 800°C, it has a specific surface area of at least 15 m²/g, more particularly at least 40 m²/g.

10. Cerium oxide according to any one of the preceding claims, **characterized in that** it does not contain cerium III oxide which can be detected by X ray diffraction analysis.

11. Cerium oxide according to any one of claims 1 to 7 and 10, **characterized in that** it has a pore volume of at most 0.30 cm³/g, more particularly at most 0.25 cm³/g.

12. A process for preparing a cerium oxide with pores having a lamellar structure by heat treatment of a cerium carbonate, **characterized in that** a compound constituted essentially by an octahydrated cerium carbonate is heat treated under conditions which enable decomposition of the carbonate without dehydration thereof and formation of a carbonate with a different degree of hydration and in an atmosphere comprising an air/steam mixture or oxygen/steam mixture in a volume fraction of steam of at least 40%.

13. A process according to claim 12, **characterized in that** said compound is heat treated at a temperature of over 100°C, more particularly at least 120°C.

14. A process according to claim 12 or claim 13, **characterized in that** an atmosphere with a steam volume fraction of at least 70%, more particularly at least 90%, is used.

15. A process according to any one of claims 12 to 14, **characterized in that** the heat treatment is carried out in a fluidised bed reactor.

16. A catalytic system, **characterized in that** it comprises a cerium oxide according to any one of claims 1 to 11.

17. A catalytic system, **characterized in that** it comprises a wash coat based on a cerium oxide according to any one of claims 1 to 11, on a substrate.

18. Use of a cerium oxide according to any one of claims 1 to 11, or a catalytic system according to claim 16 or claim 17, for the production of a catalyst for automobile post combustion.

19. Use of a cerium oxide according to any one of claims 1 to 11, or of a catalytic system according to claim 16 or claim 17, for catalysis of automobile post combustion.
